# EUROPÄISCHE PATENTSCHRIFT

(11) **EP 2 461 188 B1**
(45) Veröffentlichungstag und Bekanntmachung des Hinweises auf die Patenterteilung: **06.04.2016**
(21) Anmeldenummer: 11176844.6
(22) Anmeldetag: 08.08.2011
(51) Int. Cl.: G01V 8/20

(54) **Optoelektronischer Sensor**
Optoelectronic sensor
Capteur optoélectronique

(30) Priorität: 12.10.2010 DE 102010038118
(43) Veröffentlichungstag der Anmeldung: 06.06.2012
(73) Patentinhaber: SICK AG, 79183 Waldkirch (DE)
(72) Erfinder: Kietz, Daniel, 79359 Riegel (DE); Bürger, Jürgen, 79331 Nimburg (DE); Hauptmann, Axel, 79183 Waldkirch (DE); Hirt, Günter, 77790 Steinach (DE)

(56) Entgegenhaltungen:
- EP-A1- 2 144 091
- EP-A2- 1 821 120
- EP-A2- 2 071 363
- DE-A1- 2 532 602
- DE-A1- 2 934 554
- US-A- 3 551 683

## Beschreibung

Die Erfindung betrifft ein Lichtgitter und ein Verfahren zur Bestimmung der Höhe und/oder Dicke eines Objekts nach dem Oberbegriff von Anspruch 1 beziehungsweise 8.

Lichtgitter umfassen eine Vielzahl von Sendeelementen und zugeordneten Empfangselementen, so dass jeweils ein Paar aus einem Sendeelement und einem Empfangselement eine Lichtschranke bildet, die erkennt, ob der zwischen dem Sendeelement und dem Empfangselement aufgespannte Lichtstrahl von einem Objekt unterbrochen ist oder nicht. Die Sendeelemente und Empfangselemente sind jeweils in einer Sendeeinheit und einer Empfangseinheit zusammengefasst, die einander gegenüber montiert werden. Es gibt auch Lichtgitter, in denen Sendeelemente und Empfangselemente in zwei einander gegenüberstehenden, gemischten Sende- und Empfangseinheiten untergebracht sind.

Die Vorstellung eines Lichtstrahls der einzelnen Sendelemente ist idealisiert. Tatsächlich entstehen in Abhängigkeit von den Öffnungswinkeln der strahlformenden Optiken Lichtbündel mit endlichem Querschnitt. Um die Justageanforderungen handhabbar zu halten, empfängt bei üblichen Abständen zwischen Sendeeinheit und Empfangseinheit aufgrund der Sendestrahldivergenz ein Empfangselement Sendelicht nicht nur von dem zugeordneten Sendeelement, sondern auch von dessen Nachbarn. Um Fehlauswertungen zu vermeiden, werden deshalb die Sendeelemente zyklisch aktiviert. Dabei werden nacheinander von jedem Sendeelement einzelne Lichtpulse oder Pakete ausgesandt, und für ein gewisses Zeitfenster wird nur das zugehörige Empfangselement aktiviert, um festzustellen, ob sich in dem jeweiligen Lichtstrahl ein Objekt befindet. Die Lichtstrahlen werden in diesem Zusammenhang auch als Kanäle bezeichnet.

Die Empfangseinheit muss hierfür die Zeitfenster kennen, in denen jeweils ein Sendeelement aktiv ist, und auch wissen, welches Sendeelement in diesem Zeitfenster sendet. Deshalb sind Sendereinheit und Empfangseinheit aufeinander synchronisiert. Bevorzugt wird eine optische Synchronisation genutzt, um eine Leitungsverbindung zwischen Sendeeinheit und Empfangseinheit zu vermeiden.

Ein Anwendungsfeld für Lichtgitter ist die Sicherheitstechnik. Die parallelen Lichtstrahlen dienen dabei als eine Art virtuelle Wand, und bei Unterbrechung durch ein Objekt wird beispielsweise eine Gefahrenquelle abgesichert. In der Automatisierungstechnik werden Lichtgitter zur Vermessung von Objekten eingesetzt, um die Position und Ausdehnung von Objekten anhand der Position und Anzahl unterbrochener Strahlen zu messen. Beispielsweise kann auf diesem Weg die Höhe von auf einem Förderband bewegten Objekten bestimmt werden.

Ein Vorteil von Lichtgittern bei solchen Vermessungsaufgaben gegenüber anderen optoelektronischen Sensoren, wie Scannern oder Lichtschnittsensoren, liegt darin, dass alle Strahlen parallel verlaufen und deshalb kein Schattenwurf und keine geometrisch bedingte Verzerrung des Objekts vorliegt. Nachteilig ist die begrenzte Auflösung, denn die Fähigkeit des Lichtgitters zur Erkennung kleiner Objekte wird durch den gegenseitigen Abstand zweier benachbarter Strahlen begrenzt. Auf die gleiche Weise wird die Messgenauigkeit bei der Bestimmung der Lage von Objektkanten größerer Objekte beschränkt, die somit zwar erkannt, aber höchstens mit der Auflösung des Strahlabstands vermessen werden. Befindet sich ein Objekt in einer Lücke zwischen zwei Strahlen, kann es nicht erkannt werden. Je kleiner die zu detektierenden Objekte sind, desto geringer muss der Strahlabstand sein.

Die naheliegende Möglichkeit, um das Auflösungsvermögen eines Lichtgitters zu erhöhen beziehungsweise kleinere Objekte zu detektieren, ist demnach eine Verringerung des Strahlabstands, um die Lücke zwischen zwei benachbarten Strahlen zu verkleinern. Bei gleichbleibendem Messfeld werden dementsprechend zusätzliche Sendeund Empfangsbauteile benötigt. Dadurch steigen die Kosten und auch die Ansprechzeit, weil sich der Auswertungszyklus verlängert, in dem die Strahlen zur Vermeidung von mehrdeutigen Empfangssignalen nacheinander aktiviert werden.

Ein anderer Ansatz wird als Kreuzstrahltechnik bezeichnet. Dabei betrachtet ein Empfangselement nicht nur die Strahlen seines gegenüberliegend zugeordneten Sendeelements, sondern auch benachbarte Sendestrahlen. Auf diese Weise ergeben sich zusätzliche, schräge Strahlen, mit denen Objekte zwischen den ursprünglichen, gerade ausgerichteten Strahlen erkannt werden. Die Auflösungserhöhung ist aber nicht über den ganzen Überwachungsbereich möglich und auch ungleichmäßig, nämlich vom Abstand des Objekts zu dem Sendeelement beziehungsweise Empfangselement abhängig. Aus demselben Grund erlaubt auch die Objektdetektion durch einen Kreuzstrahl keine geometrische Zuordnung des Objekts zur Überwachungshöhe, so dass in den Lücken zwischen den ursprünglichen, gerade ausgerichteten Strahlen zwar eine binäre Objektfeststellung, aber keine Vermessung möglich ist. Außerdem erhöht sich die Ansprechzeit, weil der Auswertungszyklus sich um die Aktivitätszeitfenster der Kreuzstrahlen verlängert.

Eine energetische Auswertung ist anwendbar, wenn der Strahldurchmesser so groß ist, dass zwei Strahlen bei gegebenem Raster aneinander stoßen. Dann wird nicht wie sonst üblich binär mit einem Schwellenvergleich auf Strahlunterbrechungen ausgewertet, sondern quantitativ ein Maß ermittelt, in dem ein Objekt den jeweiligen Strahl abdeckt. So werden auch Objekte kleiner als der Strahldurchmesser erkannt. Wie schon bei der Kreuzstrahltechnik ist damit keine geometrische Zuordnung des Objekts zur Überwachungshöhe möglich. Das Lichtgitter erkennt zwar das kleine Objekt und kann auch eine Dickeninformation aus dem Maß der Abdeckung ableiten, hat aber keinerlei Information, wo sich das Objekt innerhalb des Strahldurchmessers befindet. Die Positionsauflösung wird demnach nicht verbessert. Außerdem kann das Lichtgitter nicht zwischen einer Signalminderung aufgrund einer Teilabdeckung durch ein Objekt oder teiltransparenten Objekten und Umwelteinflüssen unterscheiden, wie etwa einer Verschmutzung der strahlformenden Optiken.

Aus der US 3 551 683 ist eine Vorrichtung zur Erfassung der Anwesenheit eines Objekts in einer Zone bekannt. Dabei wird an einer Seite der Zone mit einer Röhre ein vertikal aufgeweiteter Lichtstrahl ausgesandt und auf der anderen Seite der Zone der Empfangspegel von einer Vielzahl zusammengeschalteter Photodioden bestimmt. Den Empfängern ist eine Vielzahl von überlappend gegeneinander versetzten Linsen zugeordnet. Diese Linsen sorgen dafür, dass ein kleines Objekt mehrere Schatten auf die Photodioden wirft und somit einen größeren und leichter zu detektierenden Intensitätsabfall bewirkt.

Die DE 29 34 554 A1 offenbart ein optoelektronisches Überwachungsgerät mit einem Sendelichtstrahl, der mit Hilfe einer Ablenkvorrichtung eine Reihe von geneigt und hintereinander angeordneten teildurchlässigen Spiegeln abtastet. Im Reflexionsstrahlengang dieser Spiegel ist jeweils ein Lichtempfänger mit einer Linse vorgesehen. Diese Linsen bilden eine Reihenanordnung und überlappen sich in ihrem Randbereich, damit keine blinden Bereiche entstehen.

Aus der EP 2 071 363 A2 ist ein Lichtgitter bekannt, welches seine Strahlen jeweils zyklisch auswertet. Einer der Strahlen dient der Synchronisation und verwendet ein besonderes Pulsmuster, um den Synchronisationsstrahl von den übrigen Strahlen unterscheiden zu können.

Es ist daher Aufgabe der Erfindung, das Auflösungsvermögen eines Lichtgitters zu verbessern.

Diese Aufgabe wird durch ein Lichtgitter gemäß Anspruch 1 und ein Verfahren zur Bestimmung der Höhe und/oder Dicke eines Objekts gemäß Anspruch 8 gelöst. Dabei geht die Lösung von dem Grundgedanken aus, die Signalinformation einer Lücke benachbarter Strahlen auszunutzen. Um hier genügend Signalinformation zu gewinnen, sollen die Strahlen praktisch ineinander gemischt werden, um eine differentielle Signalauswertung zur Auflösungserhöhung vornehmen zu können. Dies wird durch besondere strahlformende Optiken an den Lichtsendern und Lichtempfängern erreicht, bei der sich die Optiken in Richtung senkrecht zu dem Überwachungsfeld gegenseitig überlappen. Überlappung bedeutet hier nicht, dass die Linsen physikalisch übereinander liegen, sondern sich bei Betrachtung aus der soeben definierten Richtung ein Überlapp ergibt. Dieser Überlapp führt zu einem entsprechenden Überlapp der zugehörigen Lichtstrahlen. Dabei ist der Überlapp nicht lediglich quer, sondern im Wesentlichen senkrecht zu dem Überwachungsfeld vorgesehen. Ein genau senkrecht ausgerichteter Überlapp ist nicht erforderlich, beispielsweise ist ein gegenseitiger Versatz der Optiken in Strahlrichtung denkbar. Wichtig ist die Wirkung, dass ein Objekt im Gegensatz zu herkömmlichen Lichtgittern in ein und derselben Höhenlage auf den Empfangspegel mehrerer Strahlen einwirkt, um die differentielle Auswertung zu ermöglichen.

Die Erfindung hat den Vorteil, dass keine Erhöhung der Strahlanzahl erforderlich ist und damit die Auflösungserhöhung praktisch kostenneutral bleibt. Dabei wird eine echte Auflösungserhöhung erzielt, die auch eine geometrische Zuordnung in dem Überwachungsbereich erlaubt. Trotz der verbesserten Auflösung bleibt die Zahl der auszuwertenden Einzelstrahlen und damit die Ansprechzeit konstant. Es wird somit eine Subpixelauflösung mit Ortsbestimmung kleiner Objekte erreicht.

Sofern sichergestellt ist, dass die zu erfassenden Objekte sich unmittelbar vor den Lichtempfängern befinden, genügt es, nur die empfangsseitigen Optiken überlappend auszugestalten. Im Allgemeinen werden aber sowohl den Lichtsendern als auch den Lichtempfängern erfindungsgemäße Optiken vorgeordnet.

Die Optiken weisen eine Geometrie und Anordnung auf, bei der aufgrund der Überlappung jede gedachte Linie senkrecht zu dem Feld, die einen nicht am Rand des Feldes angeordneten Überwachungsstrahl schneidet, mindestens einen weiteren Überwachungsstrahl schneidet. Diese gedachte Linie hat eine gewisse Breitenausdehnung, da physikalische und nicht mathematische Objekte erkannt werden sollen. Dünne Bereiche, in denen sich die Optiken nicht hinreichend überlappen, um die obige Bedingung zu erfüllen, sind deshalb unerheblich. Die Überlappung ist demnach so groß, dass ein Objekt in jeder Überwachungshöhe auf den Empfangspegel von mindestens zwei Empfangselementen einwirkt, so dass immer ein differentielles Signal zur Verfügung steht. Davon sind nur die beiden Strahlen am Rand des Überwachungsfeldes ausgenommen. Es ist auch denkbar, in dem Sensor nur mindestens einen Teilbereich des Überwachungsbereichs vorzusehen, in dem die genannte Überlappung der Überwachungsstrahlen entsteht. Dieser Sensor hat dann nicht über die gesamte Überwachungshöhe, sondern nur in den Teilbereichen eine erhöhte Auflösung.

Die Optiken weisen bevorzugt eine ellipsenförmige, dreiecksförmige oder vierecksförmige Geometrie auf. Mit diesen Geometrien können Strahlen geformt werden, welche die geforderte Vermischung erreichen. Dabei sind abgerundete Strahlquerschnitte optisch leichter und homogener zu realisieren, während eckige Strahlquerschnitte einen lückenlosen Überlapp erlauben.

Die Optiken sind bevorzugt untereinander flächengleich. Dadurch müssen keine Pegelunterschiede aufgrund des Strahlquerschnitts berücksichtigt werden. Es ist aber andererseits auch denkbar, derartige Pegelunterschiede anhand der Flächenunterschiede zu berechnen oder einzulernen. Besonders bevorzugt weisen die Optiken sogar untereinander identische Geometrien auf. Dann kommt zu der vereinfachten Auswertung eine vereinfachte Herstellung und Handhabung hinzu.

Die Optiken sind bevorzugt gleichmäßig in einer Reihe an zwei gegenüberliegenden Kanten des Feldes angeordnet. Dadurch wird eine gleichmäßige Auflösung über die gesamte Übenrvachungshöhe erreicht.

Es ist eine Auswertungseinheit vorgesehen, in der anhand der Empfangspegel zueinander benachbarter Lichtempfänger eine Höhe und/oder Dicke von Objekten in dem Feld mit einer besseren Auflösung als der Abstand zweier benachbarter Überwachungsstrahlen bestimmbar ist. Die Höhe eines Objekts ist die Position des Objekts oder einer Objektkante in Höhenrichtung. Dagegen wird als Dicke die eigene Ausdehnung des Objekts in Höhenrichtung bezeichnet. Wenn der Sensor und das Objekt am unteren Ende bündig ausgerichtet sind, fallen Dicke und Höhe somit zusammen. Dagegen sind beispielsweise für ein kleines Objekt im Überwachungsfeld Dicke und Höhe zwei unterschiedliche Messgrößen. Wegen der überlappenden Optiken ist für beide Messgrößen eine Subpixelauswertung möglich, also ein Messwert, der genauer ist als der Strahlabstand.

Die Auswertungseinheit ist bevorzugt dafür ausgebildet, die Höhe und/oder Dicke unter Einbeziehung eines Verhältnisses und/oder einer Differenz der Empfangspegel zueinander benachbarter Lichtempfänger zu bestimmen. Aus der differentiellen Empfangspegelauswertung ergibt sich ein Messwert mit Subpixelauflösung für Dicke oder Höhe in einer Lücke zwischen zwei herkömmlichen Kanälen. Um größere Objekte zu vermessen, werden derartige Subpixelmesswerte an beiden Rändern des Objekts zu einem Messwert addiert, welcher wie herkömmlich der Anzahl vollständig verdeckter Strahlen entspricht.

Zusätzlich oder alternativ ist die Auswertungseinheit dafür ausgebildet, die Höhe und/oder Dicke aus dem Empfangspegel eines Lichtempfängers im Vergleich zu einem maximalen Empfangspegel des Lichtempfängers zu bestimmen. Diese energetische Auswertung liefert eine weitere Messinformation über die Dicke oder Höhe des Objekts. Dazu wird der relative Empfangspegel bestimmt, wobei Bezugsgröße das Maximum ist, also der Empfangspegel bei freiem Strahlengang.

In der Auswertungseinheit ist bevorzugt vorab eine erwartete Abhängigkeit der Empfangspegel der Lichtempfänger von der Höhe und/oder Dicke eingelernt oder abgelegt. Einlernen bedeutet, dass der Sensor unter definierten Bedingungen betrieben wird und dabei die Abhängigkeit ermittelt oder verbessert. Abgelegte Abhängigkeiten dagegen werden ab Werk oder später von einem Datenträger eingespielt oder parametriert. Die funktionale Abhängigkeit des Empfangspegels kann insbesondere bei fester, bekannter Dicke und veränderlicher Höhe eingelernt oder abgelegt werden. Dazu wird noch bevorzugter ein Objekt geringer Dicke verwendet, etwa mit 1/3, 1/10 oder noch weniger des Strahlabstands. Dadurch entsteht für jeden Lichtempfänger eine eindimensionale Kurve, aus welcher die Auswertungseinheit die notwendigen Zusammenhänge zwischen den aktuellen Signalpegeln und der Messgröße Höhe unmittelbar entnimmt. Durch Integration ist, zumindest unter der Annahme homogener Strahlen, die Umrechnung auf andere, feste Dicken möglich, so dass Höhenmessungen für jede Dicke möglich sind. Die Dicke selbst kann dann beispielsweise durch energetische Messung bestimmt werden. Lernt man die Abhängigkeiten ein, statt sie aus den optischen Parametern und der Geometrie zu errechnen, so werden dadurch Strahlinhomogenitäten ausgeglichen.

Die Auswertungseinheit ist bevorzugt dafür ausgebildet, eine Optik als verschmutzt zu erkennen, wenn der Empfangspegel eines Lichtempfängers, nicht aber die Empfangspegel benachbarter Lichtempfänger abfallen. Es ist aufgrund der überlappenden Optiken nicht plausibel, dass ein Objekt nur den Empfangspegel eines Lichtempfängers beeinflusst. Deshalb kann der Sensor daraus auf eine Verschmutzung rückschließen. Es erfolgt dann eine Bewertung, ob die Verschmutzung kritisch ist, und gegebenenfalls eine Wartungsanforderung. Andererseits kann der Sensor die Verschmutzung aber auch im weiteren Betrieb ausgleichen, sei es durch erhöhte Sendeleistung des betroffenen Lichtsenders, erhöhte Empfangsempfindlichkeit oder durch Herausrechnen des Verschmutzungseffekts.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Querschnittsdarstellung eines Lichtgitters;
- Fig. 2a: eine Frontalansicht einer erfindungsgemäßen überlappenden Optik mit einigen Hilfslinien zur Erläuterung des Effekts auf die erzeugten Überwachungsstrahlen;
- Fig. 2b: die Frontalansicht gemäß Fig. 2a mit einem strahlunterbrechenden bewegten Testobjekt ;
- Fig. 3: eine Darstellung der relativen Empfangspegel der einzelnen Lichtempfänger in Abhängigkeit von der Position des Testobjekts in Fig. 2b; und
- Fig. 4a-b: Frontalansichten von alternativen Ausführungsformen erfindungsgemäßer überlappender Optiken.

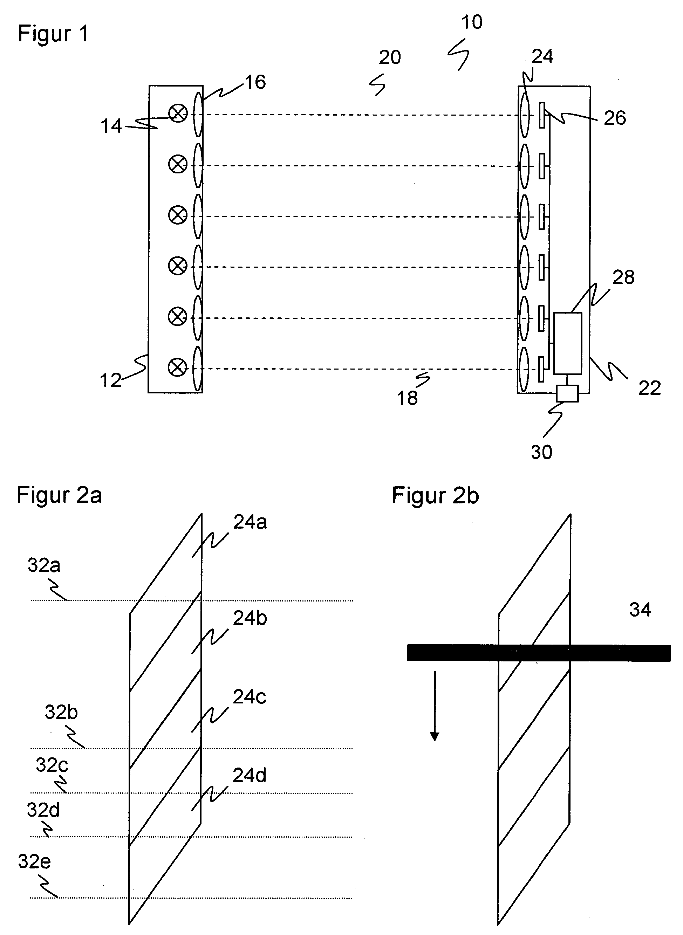

Figur 1 zeigt eine schematische Querschnittsdarstellung eines Lichtgitters 10. Eine Sendeeinheit 12 umfasst eine Vielzahl in einer Reihe angeordneter Lichtsender 14, beispielsweise LEDs oder Laser im infraroten oder einem anderen Spektrum. Das Licht der Lichtsender 14 wird jeweils mit einer nachgeordneten Sendeoptik 16 kollimiert und als Lichtstrahl 18 durch einen Überwachungsbereich 20 zu einer Empfangseinheit 22 gesandt. Die Lichtstrahlen 18 treffen jeweils über eine Empfangsoptik 24 auf einen jedem Lichtsender 14 zugeordneten Lichtempfänger 26, der meist als Fotodiode ausgebildet ist, alternativ aber auch ein ortsauflösender CCD- oder CMOS-Bildsensor sein kann.

Die Sendeoptiken 16 sowie die Empfangsoptiken 24 können entgegen der Darstellung weitere Elemente wie zusätzliche Linsen, Blenden und dergleichen umfassen und sorgen dafür, dass die Lichtstrahlen 18 ein gewünschtes Strahlprofil aufweisen. Eine Auswertungseinheit 28 ist mit den Lichtempfängern 26 verbunden und erhält so elektrische Empfangssignale, die den Empfangspegeln der einzelnen Lichtempfänger 26 entsprechen. Dazu werden die Lichtsender 14 und die Lichtempfänger 26 zyklisch in einem Zeitmultiplexverfahren nacheinander aktiviert. Aus den Empfangspegeln ermittelt die Auswertungseinheit 28, ob sich ein Objekt in dem Überwachungsbereich befindet. Ist das der Fall, kann die Auswertungseinheit 28 dessen Höhenlage und/oder Dicke bestimmen. Je nach Ausführungsform, Anwendung und Parametrierung stellt der Sensor das Ergebnis der Auswertung als binäres Objektfeststellungssignal, Höhe beziehungsweise Dicke eines Objekts an einem Ausgang 30 zur Verfügung.

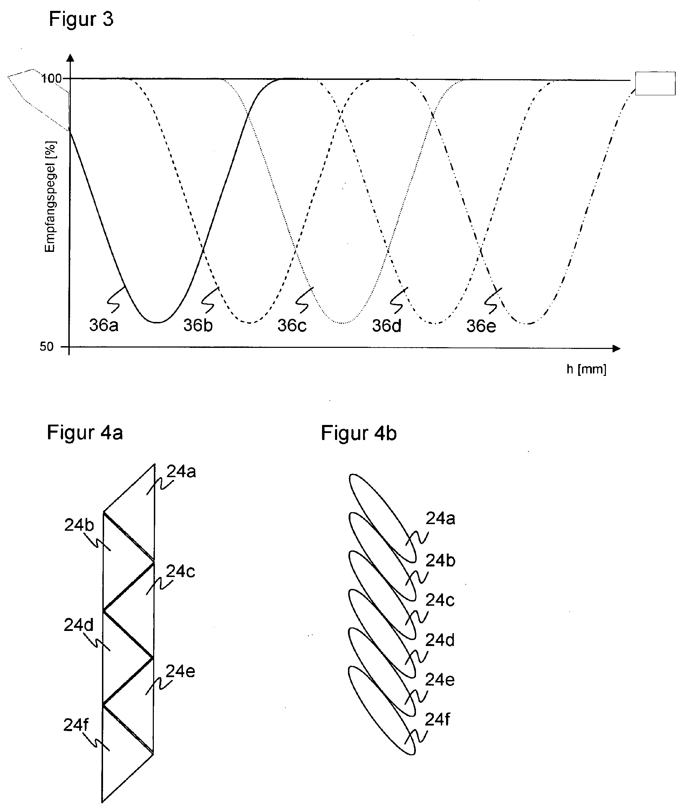

Die Ausgestaltung der strahlformenden Optik sowie die so ermöglichte Subpixelauflösung durch differentielle Auswertung in dem Lichtgitter 10 wird nun anhand der Figuren 2 und 3 näher erläutert. Figur 2a zeigt die strahlformenden Optiken 24 der Empfangseinheit 22. Zu beachten ist, dass es sich hier nicht um eine perspektivische Darstellung, sondern um eine Frontalansicht handelt. Der Querschnitt der einzelnen Linsen 24a-d ist demnach ein Parallelogramm. Die sendeseitigen strahlformenden Optiken 16 sind identisch gestaltet. Dadurch erhalten auch die ausgesandten Lichtstrahlen 18 den dargestellten Querschnitt. Dabei können in der Praxis wegen Divergenz der Lichtsender 14 die physikalischen Lichtbündel und wegen größerer empfangsseitiger Öffnungswinkel auch die Empfangsbereiche durchaus für sich von dieser Form abweichen. Der auf Objekteingriffe überwachbare Erfassungsbereich jedes Lichtstrahls 18 wird aber durch die direkten Verbindungslinien gebildet und entspricht daher dennoch dem dargestellten Querschnitt.

Für die Erfindung kommt es nicht auf die dargestellte Form der Einzellinsen 16, 24 an. Das wesentliche Merkmal ist ein Überlapp in Richtung der Überwachungshöhe, demnach der Längsachse des Papiers in Figur 1. Dadurch gehen die einzelnen Lichtstrahlen 18 ineinander über. Dies lässt sich auch anhand von gedachten Linien 32a-e quer und vorzugsweise senkrecht zu dem von den parallelen Lichtstrahlen 18 aufgespannten Überwachungsfeld 20 erklären. In Figur 1 würden diese Linien 32a-e senkrecht zur Papierebene verlaufen, in der Frontalansicht der Figur 2 sind sie horizontal. Die Linien 32a-e sollen zumindest in Teilbereichen und bevorzugt überall im Überwachungsfeld 20 mindestens zwei Optiken 16, 24 beziehungsweise Lichtstrahlen 18 schneiden. Diese Bedingung ist selbstverständlich für Linien 32a, 32e am Rand des Überwachungsfeldes 20 nicht erfüllbar. Durch den Überlapp wird erreicht, dass ein Objekt im Überwachungsfeld 20 zumindest zwei Lichtstrahlen 18 zugleich zumindest teilweise unterbricht.

In Figur 2b wird ein Testobjekt 34 mit einer Dicke, die geringer ist als der Abstand zwischen zwei Lichtstrahlen 18, mit variierender Höhe durch das Überwachungsfeld 20 verfahren. Wegen des soeben erläuterten Überlapps der Optiken 16, 24 und damit der Lichtstrahlen 18 wirkt das Testobjekt 34 in jeder Höhe auf mindestens zwei Lichtstrahlen 18 ein. Wegen der zyklischen Auswertung kann die Auswertungseinheit 28 die empfangene Lichtmenge für jeden Lichtempfänger 26 und damit die in jedem einzelnen Kanal von einer einzelnen Linse 24a-d erfasste Lichtmenge bestimmen.

Bei gleichmäßigem Verfahren des Testobjekts kann so die in Figur 3 gezeigte Funktion des relativen Empfangspegels in Abhängigkeit von der Höhe für jeden einzelnen Kanal bestimmt werden. Die Empfangspegel 36a-e sind hier beispielhaft für fünf Kanäle in verschiedenen Stricharten dargestellt. Wie deutlich zu erkennen, entsteht auf jeder Höhe des Testobjekts 34 in mindestens zwei Kanälen ein relativer Empfangspegel 36a-e, der von einem nicht unterbrochenen Kanal abweicht und daher einer Objekterfassung entspricht. Bei einem herkömmlichen Lichtgitter wären die einzelnen Empfangspegel 36a-e vollständig über die Höhenachse entzerrt, was bedeutet, dass auf ein und derselben Höhe jeweils nur der Empfangspegel 36a-e eines Kanals auf das Testobjekt 34 ansprechen würde.

Die Auswertungseinheit 28 ist nun in der Lage, aus den Empfangspegeln 36a-e eindeutig auf die Höhe des Testobjekts 34 zu schließen. Dazu sind der Auswertungseinheit 28 die erwarteten Abhängigkeiten der Empfangspegel 36a-e von der Höhe vorab bekannt, sei es durch Werkseinstellung oder anfängliches Einlernen. Im Betrieb wird dann das Verhältnis benachbarter Empfangspegel 36a-e oder deren Differenz betrachtet und anhand der bekannten Abhängigkeit der Empfangspegel 36a-e von der Höhe ausgewertet.

Aus den Empfangspegeln 36a-e in Abhängigkeit von der Höhe bei einer festen Dicke des Testobjekts 34 lassen sich durch Integration entsprechende Eichkurven für größere Dicken ableiten. Kennt die Auswertungseinheit 28 demnach Eichkurven für das dünnste zu erkennende Testobjekt 34, so lassen sich alle übrigen Dicken daraus rechnerisch bestimmen. Alternativ können auch Eichkurven für verschiedene Dicken gemessen und eingelernt werden. Das hat den Vorteil, dass Strahlinhomogenitäten der konkret eingesetzten Lichtsender 14 und Optiken 16, 24 berücksichtigt werden. Bei Objekten, deren Dicke den Strahlabstand überschreitet, ist die beschriebene differentielle Auswertung nur für die Ränder relevant. Zusätzlich sind ganzzahlige Strahlabstände anhand unterbrochener Strahlen zu addieren.

Über die Energiereduktion lässt sich darüber hinaus auch die Dicke des Objekts bestimmen. Dazu werden also nicht differentielle Vergleiche oder Verhältnisse benachbarter Strahlen betrachtet, sondern der Abfall des Empfangspegels 36a-e innerhalb eines Kanals. Gegebenenfalls muss aber die Energiereduktion in mehreren Kanälen bewertet werden, um einen verlässlichen Messwert zu erhalten.

Figur 4 zeigt alternative Ausgestaltungen der Optiken 16, 24 und damit alternativen Strahlquerschnitten und Strahlanordnungen. Diese Auswahl ist beispielhaft zu verstehen, die Erfindung umfasst weitere Anordnungen und Querschnittsgeometrien wie Trapeze, Sechsecke und andere.

In Figur 4a sind die Linsen 24a-f dreieckig, insbesondere in Form gleichschenkliger Dreiecke. Wie schon zu Figur 2a erläutert, haben vorzugsweise die Sendelinsen 16 und damit auch der Querschnitt der Strahlen 18 dieselbe Gestalt. Bei sämtlichen eckigen Formen können die Ecken abgerundet werden. Eckige Querschnitte ermöglichen, den Querschnitt des Überwachungsbereichs 20 vollflächig abzudecken. Mit elliptischen Linsen 24a-f wie in Figur 4b bleiben im Randbereich Lücken, die zu einer Ungenauigkeit der Vermessung führen können. Es kann aber Anwendungen geben, wo diese Lücken beispielsweise aufgrund einer Mindestausdehnung der Objekte in Querrichtung keine Rolle spielen, oder wo die Ungenauigkeit zugunsten eine besser handhabbaren Optik 16, 24 hingenommen werden.

## Patentansprüche

1. Lichtgitter (10) mit einer Vielzahl von zyklisch nacheinander aktivierten Lichtsendern (14) und Lichtempfängern (26), die zwischen sich ein Feld (20) zueinander paralleler Überwachungsstrahlen (18) aufspannen, wobei den Lichtsendern (14) und den Lichtempfängern (26) strahlformende Optiken (16, 24) zugeordnet sind, und mit einer Auswertungseinheit (28) zur differentiellen Auswertung der Empfangspegel der Lichtempfänger (26),
**dadurch gekennzeichnet,**
**dass** die Optiken (16, 24) sendeseitig wie empfangsseitig eine Geometrie und Anordnung aufweisen, die in einer Richtung senkrecht zu dem Feld (20) zu einer gegenseitigen Überlappung der Optiken (16, 24) führt, so dass jede gedachte Linie (32) senkrecht zu dem Feld (20), die einen nicht am Rand des Feldes (20) angeordneten Überwachungsstrahl (18) schneidet, mindestens einen weiteren Überwachungsstrahl (18) schneidet, und dass die Auswertungseinheit (28) zur differentiellen Auswertung der Empfangspegel der Lichtempfänger (26) dafür ausgebildet ist, anhand der Empfangspegel (36) zueinander benachbarter Lichtempfänger (26) eine Höhe und/oder Dicke von Objekten in dem Feld (20) mit Subpixelauflösung zu bestimmen, wobei eine bessere Auflösung als der Abstand zweier benachbarter Überwachungsstrahlen (18) erreicht wird.

2. Lichtgitter (10) nach Anspruch 1,
wobei die Optiken (16, 24) eine ellipsenförmige, dreiecksförmige oder vierecksförmige Geometrie aufweisen.

3. Lichtgitter (10) nach Anspruch 1 oder 2,
wobei die Optiken (16, 24) untereinander flächengleich sind, insbesondere untereinander eine identische Geometrie aufweisen.

4. Lichtgitter (10) nach einem der vorhergehenden Ansprüche,
wobei die Optiken (16, 24) gleichmäßig in einer Reihe an zwei gegenüberliegenden Kanten des Feldes (20) angeordnet sind.

5. Lichtgitter (10) nach einem der vorhergehenden Ansprüche,
wobei die Auswertungseinheit (28) dafür ausgebildet ist, die Höhe und/oder Dicke unter Einbeziehung eines Verhältnisses und/oder einer Differenz der Empfangspegel (36) zueinander benachbarter Lichtempfänger (26) und/oder aus dem Empfangspegel (36) eines Lichtempfängers (26) im Vergleich zu einem maximalen Empfangspegel des Lichtempfängers (26) zu bestimmen.

6. Lichtgitter (10) nach einem der vorhergehenden Ansprüche,
wobei in der Auswertungseinheit (28) vorab eine erwartete Abhängigkeit der Empfangspegel (36) der Lichtempfänger (26) von der Höhe und/oder Dicke eingelernt oder abgelegt ist.

7. Lichtgitter (10) nach einem der vorhergehenden Ansprüche,
wobei die Auswertungseinheit (28) dafür ausgebildet ist, eine Optik als verschmutzt zu erkennen, wenn der Empfangspegel (36) eines Lichtempfängers (26), nicht aber die Empfangspegel (36) benachbarter Lichtempfänger (26) abfallen.

8. Verfahren zur Bestimmung der Höhe und/oder Dicke eines Objektes mit einem Lichtgitter (10) nach einem der vorhergehenden Ansprüche.

## Claims

1. An light grid (10) having a plurality of light transmitters (14) and light receivers (26) which are cyclically activated and which form between one another a field (20) of mutually parallel monitoring beams (18), wherein beam shaping optics (16, 24) are assigned to the light transmitters (14) and the light receivers (26), and having an evaluation unit (28) for a differential evaluation of the reception levels of the light receivers (26),
**characterized in that**
the transmission and reception optics (16, 24) comprise a geometry and arrangement leading to a mutual overlap of the optics (16, 24) in a direction perpendicular to the field (20) so that any imaginary line (32) perpendicular to the field (20) intersecting a monitoring beam (18) being not arranged at an edge of the field (20) intersects at least one further monitoring beam (18), and **in that** the evaluation unit (28) for the differential evaluation of the reception levels of the light receivers (26) is configured to determine a height and/or thickness of objects in the field (20) based on the reception levels (36) of adjacent light receivers (26) with sub pixel resolution, wherein a better resolution than the distance between two adjacent monitoring beams (18) is achieved.

2. The sensor (10) according to claim 1,
wherein the optics (16, 24) comprise an elliptical-shaped, triangular-shaped or quadrangular-shaped geometry.

3. The sensor (10) according to claim 1 or 2,
wherein each of the optics (16, 24) has the same area, in particular the same geometry.

4. The sensor (10) according to any of the preceding claims,
wherein the optics (16, 24) are regularly arranged in a row on two opposite edges of the field (20).

5. The sensor (10) according to any of the preceding claims,
wherein the evaluation unit (28) is configured to determine the height and/or thickness based on a quotient and/or a difference of the reception levels (36) of adjacent light receivers (26) and/or on a reception level (36) of a light receiver (26) as compared to a maximum reception level of the light receiver (26).

6. The sensor (10) according to any of the preceding claims,
wherein an expected dependence of the reception level (36) of the light receivers (26) on the height and/or thickness is taught to or stored in the evaluation unit (28) in advance.

7. The sensor (10) according to any of the preceding claims,
wherein the evaluation unit (28) is configured to diagnose optics (16, 24) as contaminated if the reception level (36) of the light receiver (26) decreases but the reception levels (36) of adjacent light receivers (26) do not.

8. A method for determining the height and/or thickness of an object with a light grid (10) according to one of the preceding claims.

## Revendications

1. Grille lumineuse (10) comprenant une pluralité d'émetteurs de lumière (14) et de récepteurs de lumière (26) activés les uns après les autres de manière cyclique, qui couvrent entre eux un champ (20) de rayons de surveillance (18) parallèles les uns aux autres, dans laquelle des systèmes optiques (16, 24) de mise en forme des rayons sont associés aux émetteurs de lumière (14) et aux récepteurs de lumière (26), et comprenant une unité d'évaluation (28) pour l'évaluation différentielle des niveaux de réception des récepteurs de lumière (26), **caractérisée en ce que**
les systèmes optiques (16, 24) présentent, du côté émission tout comme du côté réception, une géométrie et un agencement qui mènent, dans une direction perpendiculaire au champ (20), à un chevauchement réciproque des systèmes optiques (16, 24), de sorte que chaque ligne imaginaire (32) perpendiculaire au champ (20), qui recoupe un rayon de surveillance (18) qui n'est pas agencé à la bordure du champ (20), recoupe au moins un autre rayon de surveillance (18), et **en ce que** l'unité de surveillance (26), en vue d'une évaluation différentielle des niveaux de réception des récepteurs de lumière (26), est réalisée pour déterminer, au moyen des niveaux de réception (36) de récepteurs de lumière (26) mutuellement voisins, une hauteur et/ou une épaisseur d'objets dans le champ (20) avec une résolution inférieure au pixel, et dans laquelle une résolution meilleure que la distance de deux rayons de surveillance voisins (18) est atteinte.

2. Grille lumineuse (10) selon la revendication 1,
dans laquelle les systèmes optiques (16, 24) présentent une géométrie de forme ellipsoïdale, de forme triangulaire, ou de forme quadrangulaire.

3. Grille lumineuse (10) selon la revendication 1 ou 2,
dans laquelle les systèmes optiques (16, 24) couvrent des surfaces mutuellement égales, et présentent en particulier une géométrie identique les uns par rapport aux autres.

4. Grille lumineuse (10) selon l'une des revendications précédentes, dans laquelle les systèmes optiques (16, 24) sont agencés régulièrement dans une rangée sur deux arêtes opposées du champ (20).

5. Grille lumineuse (10) selon l'une des revendications précédentes, dans laquelle l'unité d'évaluation (28) est réalisée pour déterminer la hauteur et/ou l'épaisseur en utilisant un rapport et/ou une différence des niveaux de réception (36) de récepteurs de lumière (26) mutuellement voisins et/ou à partir du niveau de réception (36) d'un récepteur de lumière (26) par comparaison à un niveau de réception maximum du récepteur de lumière (26).

6. Grille lumineuse (10) selon l'une des revendications précédentes, dans laquelle une dépendance attendue des niveaux de réception (36) des récepteurs de lumière (26) par rapport à la hauteur et/ou à l'épaisseur est préalablement apprise ou mémorisée dans l'unité d'évaluation (28).

7. Grille lumineuse (10) selon l'une des revendications précédentes, dans laquelle l'unité d'évaluation (28) est réalisée pour reconnaître qu'une optique est encrassée quand le niveau de réception (36) d'un récepteur de lumière (26) chute, mais non pas les niveaux de réception (36) de récepteurs de lumière voisins (26).

8. Procédé pour la détermination de la hauteur et/ou de l'épaisseur d'un objet avec une grille lumineuse (10) selon l'une des revendications précédentes.
